# EUROPÄISCHE PATENTSCHRIFT

(11) **EP 1 157 320 B1**
(45) Veröffentlichungstag und Bekanntmachung des Hinweises auf die Patenterteilung: **07.05.2003**
(21) Anmeldenummer: 00903561.9
(22) Anmeldetag: 14.02.2000
(51) Int. Cl.: G05F 1/62, H02M 3/158

(54) **VERFAHREN ZUR ERZEUGUNG EINER GEREGELTEN GLEICHSPANNUNG AUS EINER WECHSELSPANNUNG UND STROMVERSORGUNGSEINRICHTUNG ZUR DURCHFÜHRUNG DES VERFAHRENS**
METHOD FOR GENERATING A REGULATED DIRECT VOLTAGE FROM AN ALTERNATING VOLTAGE AND POWER SUPPLY DEVICE FOR IMPLEMENTING SAID
PROCEDE PERMETTANT DE GENERER UNE TENSION CONTINUE REGULEE A PARTIR D'UNE TENSION ALTERNATIVE, ET DISPOSITIF D'ALIMENTATION EN COURANT POUR LA MISE EN OEUVRE DE CE PROCEDE

(30) Priorität: 04.03.1999 DE 19909464
(43) Veröffentlichungstag der Anmeldung: 28.11.2001
(73) Patentinhaber: DANFOSS COMPRESSORS GmbH, 24904 Flensburg (DE)
(72) Erfinder: HARVEST, Nils-Ole, Havnbjerg, 6430 Nordborg (DK)
(74) Vertreter: Nissen, Georg
(86) Internationale Anmeldenummer: DK0000058
(87) Internationale Veröffentlichungsnummer: WO00052548

(56) Entgegenhaltungen:
- EP-A- 0 779 700
- DE-A- 3 608 082
- US-A- 4 964 029
- US-A- 5 235 504

## Beschreibung

Die Erfindung bezieht sich auf ein Verfahren nach dem Oberbegriff des Patentanspruchs 1 und eine Stromversorgungseinrichtung nach dem Oberbegriff des Patentanspruchs 2.

Eine nach diesem Verfahren arbeitende Stromversorgungseinrichtung ist aus der US-Patentschrift 5 235 504 bekannt. Sie enthält eine Vielzahl von Komparatoren, die unter anderem Meßwerte des Eingangsstroms auf der Wechselstromseite der Stromversorgungseinrichtung mit konstanten Bezugsgrößen und die Ausgangsspannung des Gleichrichters ebenfalls mit einer konstanten Bezugsgröße vergleichen. In Abhängigkeit von der Gleichrichter-Ausgangsspannung wird die Frequenz eines Oszillators und in Abhängigkeit von dessen Ausgangsfrequenz und den Ausgangssignalen der Vergleicher die Schaltfrequenz der Schalter gesteuert. Der Aufbau dieser Stromversorgungseinrichtung ist aufwendig.

Aus der europäischen Patentanmeldung 0 779 700 A2 ist eine ähnliche Stromversorgungseinrichtung bekannt, die ebenfalls eine Vielzahl von Komparatoren aufweist und bei der der Verbraucherstrom gemessen und einem vorbestimmten sinusähnlichen Kurvenverlauf nachgeregelt wird. Die Betätigung der Schalter erfolgt in Abhängigkeit von der Überschreitung eines Grenzwertes durch verschiedenste Meßgrößen, einschließlich dem Verbraucherstrom. Die Schalter werden dabei jedoch so betätigt, daß der Strom während der Schaltvorgänge nicht auf Null abfällt. Durch die auf der Gleichstromseite liegende Drosselspule fließt dabei im Mittel ein relativ hoher Gleichstrom, so daß die Drosselspule eine verhältnismäßig hohe Verlustleistung umsetzt und dementsprechend groß auszulegen ist. Darüber hinaus sind die Dioden beim Einschalten (Schließen bzw. in den leitenden Zustand Steuern) der Schalter wegen des hohen Mittelwerts des Stroms während der Sperrerholungszeit der Dioden kurzzeitig in Sperrichtung leitend, was eine zusätzliche höhere Verlustleistung bedeutet. Da der hierbei auftretende, etwa nadelförmige, in Sperrichtung fließende Stromimpuls steile Flanken hat, verursacht er darüber hinaus Störsignale im Funkfrequenzbereich.

Ein wesentliches Ziel bei den geschilderten bekannten Stromversorgungseinrichtungen ist eine Leistungsfaktorkorrektur, um einen hohen Wirkungsgrad zu erreichen. So wird bei der Stromversorgungseinrichtung nach der EP 0 779 700 A2 ein relativ hoher Leistungsfaktor von 0,97 erreicht. Sie erfüllt auch die in der internationalen Norm IEC 1000-3-2, 1995-03 vorgeschriebenen Höchstgrenzen der Harmonischen und ihrer Amplitude im Netzstrom, doch ist eine derartige Stromversorgungseinrichtung aufwendig und daher zum Einsatz in Geräten, die in sehr großen Stückzahlen in Serie hergestellt werden, z.B. in drehzahlgeregelten Haushaltskompressoren, zu kostspielig, obwohl sie mit nur einer Drosselspule auskommt, in die sich der Aufwärts- und der Abwärtswandler zeitlich teilen, da die Steuerung bei nur einer Drosselspule zu kompliziert ist, im Gegensatz zu Netzgeräten, bei denen für jeden Wandler eine eigene Drosselspule vorgesehen wäre.

Der Erfindung liegt die Aufgabe zugrunde, ein Verfahren und eine Stromversorgungseinrichtung der eingangs genannten Art anzugeben, dessen Durchführung bzw. deren Aufbau einfacher ist, die aber dennoch die erwähnte Norm IEC 1000-3-2 erfüllen.

Die Lösung dieser Aufgabe ist in den Patentansprüchen 1 und 2 gekennzeichnet.

Bei dieser Lösung kommt man mit nur drei Vergleichern und ohne Oszillator zur Steuerung der Schaltfrequenz der Schalter aus. Die Grenzwerte ändern sich in Abhängigkeit von dem Ausgangssignal der Stromversorgungseinrichtung, gegebenenfalls der Drehzahl eines den Verbraucher bildenden Motors, die wiederum ein Maß für die Ausgangsgleichspannung ist, während sich die Umschaltzeitpunkte der Schalter in Abhängigkeit vom Verbraucherstrom ändern, wobei sowohl die Änderung der Grenzwerte als auch die des Strommeßsignals einen Ausgleich von Änderungen der Regelgröße (Gleichspannung) über den Regelkreis der Regeleinrichtung bewirken.
Erfindungsgemäss ist das Verfahren so ausgestaltet, daß der erste Schalter im Aufwärtswandlungsmodus eingeschaltet ist und währenddessen der zweite Schalter ausgeschaltet wird, wenn das ansteigende Strommeßsignal den zweiten Grenzwert erreicht, und eingeschaltet wird, wenn das abfallende Strommeßsignal den ersten Grenzwert erreicht, und daß im Abwärtswandlungsmodus der zweite Schalter ausgeschaltet ist und währenddessen der erste Schalter eingeschaltet wird, wenn das abfallende Strommeßsignal den ersten Grenzwert erreicht, und ausgeschaltet wird, wenn das ansteigende Strommeßsignal den dritten Grenzwert erreicht.

Die Stromversorgungseinrichtung nach der Erfindung beinhaltet einen Aufwärtswandler und einen Abwärtswandler die gemeinsam eine Drosselspule teilen und wo die Stromversorgungseinrichtung von einer Steuereinrichtung abwechselnd in Abwertswandlungsmodus und Aufwertswandlungsmodus betrieben wird, und ist dadurch gekennzeichnet,
- daß in der Steuereinrichtung mindestens zwei Grenzwerte gebildet werden, die sich ändern wenn eine Ausgangsspannung der Stromversorgungseinrichtung sich ändert,
- daß diese Grenzwerte mittels Komparatoren mit einem Strommeßsignal, das dem Spulenstrom entspricht, verglichen wird und hieraus ein Komparatorausgangssignal gebildet wird,
- daß dieses Ausgangssignal einer Logikschaltung zugeführt wird und hieraus bestimmt wird wann von Aufwärtswandlungsmodus auf Abwärtswandlungsmodus oder umgekehrt umgeschaltet werden soll und
- daß das Ausgangssignal mit Hilfe der Logikschaltung benutzt wird um Schalter während des Abwertswandlungsmodus bzw. des Aufwertswandlungsmodus zu takten.

Vorzugsweise ist dafür gesorgt, daß der zweite und der dritte Grenzwert dem Ausgangssignal des Summiergliedes direkt proportional sind. Dies hat einen raschen Ausgleich von Regelabweichungen bzw. Regeldifferenzen zur Folge.

Hierbei können die Grenzwerte an einem Spannungsteiler abgegriffen werden, der mit dem Ausgang des Summiergliedes über einen Verstärker verbunden ist. Der Spannungsteiler bewirkt auf einfache Weise die gewünschte Proportionalität zwischen den Grenzwerten und dem Ausgangssignal des Summiergliedes.

Die Schalter können unmittelbar in Reihe geschaltet sein. Dies ermöglicht die Verwendung eines integrierten Schaltungsbauteils, auf dem die Schalter in Form von Halbleiter-Schaltern ausgebildet sind, wobei das Verlegen separater Verbindungsleitungen für den Anschluß einer, wie im bekannten Falle, zwischen den Schaltern liegenden Drosselspule, entfällt. Dabei kann das integrierte Schaltungsbauteil in IGBT-Technik (IGBT = Insulated Gate Bipolar Transistor) hergestellt und vorzugsweise ebenso wie ein herkömmliches Schaltungsbauteil aufgebaut sein, das für einen durch die Gleichspannung betriebenen Wechselrichter einer Motorsteuerung verwendet wird, d.h. anstelle von diskreten Halbleiter-Schaltern können herkömmliche in Serie hergestellte und dementsprechend kostengünstige IGBTs verwendet werden.

Wegen des nahe bei Null liegenden ersten Grenzwertes fällt der Verbraucherstrom praktisch in jeder Schaltperiode auf Null oder nahezu bis auf Null ab, so daß der Gleichstrommittelwert während der Schaltperioden relativ gering ist und dementsprechend die Drosselspule kleiner ausgebildet werden kann. Desgleichen werden die Stromspitzen in Sperrichtung der Dioden und damit die Verlustleistung der Drosselspule sowie Störsignale im Funkfrequenzbereich weiter verringert.

Vorzugsweise ist ferner dafür gesorgt, daß die Steuereinrichtung einen Schaltfrequenzbegrenzer aufweist, der durch Verzögerung des Einschaltzeitpunkts der Schalter, wenn seit dem letzten Einschaltzeitpunkt eine Mindestzeit nicht abgelaufen ist, ein Unterschreiten einer Minimal-Schaltperiodendauer der Schalter und durch Vorverlegung des Einschaltzeitpunkts der Schalter, wenn seit dem letzten Einschaltzeitpunkt eine Maximalzeit abgelaufen ist, ein Überschreiten einer Maximal-Schaltperiodendauer verhindert. Auf diese Weise werden die Schaltfrequenzen der Schalter nach oben und unten bzw. ihre Schaltperiodendauer nach unten und oben begrenzt. So hätte eine zu hohe Schaltfrequenz zu hohe Schaltverluste der Schalter zur Folge, da die Schaltverluste proportional zur Schaltfrequenz sind. Umgekehrt hätte eine zu geringe Schaltfrequenz bzw. zu hohe Schaltperiodendauer eine zu hohe Belastung der Drosselspule zur Folge.

Die Erfindung wird nachstehend anhand der beigefügten Zeichnungen näher beschrieben. Es zeigen:
- Fig. 1: ein vereinfachtes Blockschaltbild einer Schaltungsanordnung eines Ausführungsbeispiels einer erfindungsgemäßen Stromversorgungseinrichtung und
- Fig. 2: Kurvendiagramme von Spannungen und Strömen, die in der Stromversorgungseinrichtung nach Fig. 1 auftreten.

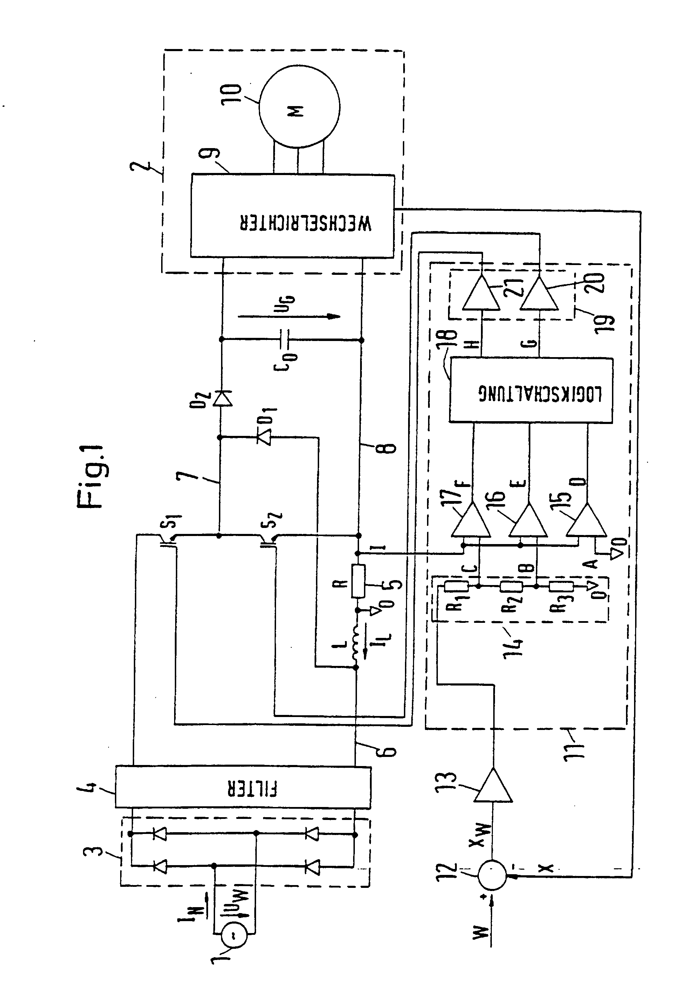

Das Blockschaltbild nach Fig. 1 stellt eine Stromversorgungseinrichtung zur Erzeugung einer geregelten Gleichspannung U_{G} aus einer Wechselspannung U_{W} eines Wechselstromversorgungsnetzes 1 für einen Verbraucher 2 schematisch dar. Sie enthält einen eingangsseitig an der Wechselspannung U_{W} liegenden Gleichrichter 3 in Brückenschaltung, an dessen Ausgang ein Filter 4 liegt. Am Ausgang des Filters 4 liegen zwei unmittelbar in Reihe geschaltete Schalter S₁ und S₂, hier Halbleiterschalter, vorzugsweise Schalttransistoren, die jeweils als IGBT und beide in einem integrierten Schaltungsmodul ausgebildet sind. In Reihe mit den Schaltern S₁, S₂ liegt eine weitere Reihenschaltung aus einer Strommeßeinrichtung 5 in Form eines ohmschen Widerstands R und einer Drosselspule L. Zwischen der Verbindungsleitung 6 von Drosselspule L und Filter 4 und der vom Verbindungspunkt der beiden Schalter S₁, S₂ zum Verbraucher 2 führenden Zuleitung 7 liegt eine Diode D₁. In der Zuleitung 7 liegt hinter dem Anschlußpunkt der Diode D₁ eine weitere Diode D₂, wobei die beiden Dioden D₁ und D₂ gleichsinnig in Reihe liegen. Zwischen der Zuleitung 7 nach der Diode D₂ und der vom Verbraucher 2 zur Reihenschaltung aus Strommeßeinrichtung 5 und Drosselspule L führenden Rückleitung 8 liegt ein Glättungskondensator Cₒ, an dem die Gleichspannung U_{G}, d.h. die Ausgangsspannung der Stromversorgungseinrichtung für den Verbraucher 2, abgenommen wird. Der Verbraucher 2 enthält einen Wechselrichter 9 mit der zugehörigen Zündimpulsgebereinrichtung zur Steuerung der Ventile des Wechselrichters, die die Frequenz der Ausgangsspannung des Wechselrichters 9 und damit die Drehzahl eines durch den Wechselrichter mit Betriebsspannung versorgten Wechselstrommotors 10 bestimmt. Ferner enthält der Wechselrichter 9 eine Meßeinrichtung, deren Meßsignal X ein Maß für die Gleichspannung U_{G} bzw. die Drehzahl des Motors 10 ist.

Das Filter 4 läßt die gleichgerichteten sinusförmigen Halbwellen der Ausgangsspannung des Gleichrichters 3 weitgehend ungeglättet durch, verhindert jedoch eine Rückwirkung der sehr viel höheren Schaltfrequenz der Schalter S₁, S₂ während des Betriebs auf die Wechselstromseite bzw. auf das Wechselstromversorgungsnetz 1.

Die Stromversorgungseinrichtung enthält ferner eine Steuereinrichtung 11 für die Schalter S₁, S₂. Diese Steuereinrichtung 11 und die vorstehend genannten Bauelemente bilden einen Teil eines Regelkreises zur Regelung der Gleichspannung U_{G} des Verbrauchers 2 bzw. der Drehzahl des Motors 10. Der Regelkreis enthält ferner ein Summierglied 12 und einen diesem nachgeschalteten Verstärker 13, einen Regelverstärker, mit proportionalem Übertragungsverhalten. Dem Summierglied 12 werden ein den Sollwert der Gleichspannung U_{G} bzw. der Drehzahl des Motors 10 darstellendes Signal W und das den Istwert der Gleichspannung U_{G} bzw. der Drehzahl des Motors 10 darstellende Meßsignal X gegensinnig zugeführt. Das Ausgangssignal X_{w} des Summiergliedes 12, die "Regelabweichung" oder "Regeldifferenz" wird über den Verstärker 13 an einen Spannungsteiler 14 gelegt, der aus einer Reihenschaltung von ohmschen Widerständen R₁, R₂ und R₃ besteht. Zusätzlich zu dem Spannungsteiler 14 enthält die Steuereinrichtung 11 drei Komparatoren 15, 16, 17, eine mit den Ausgängen der Komparatoren 15 bis 17 verbundene Logik-Schaltung 18, auch Boolesches Schaltwerk genannt, deren Ausgänge über eine Treiberschaltung 19 mit den Steueranschlüssen der Schalter S₁, S₂ verbunden sind, wobei die Treiberschaltung 19 für jeden Schalter eine Treiberstufe 20 bzw. 21 mit jeweils einem (nicht dargestellten) Bootstrap-Kondensator enthält.

Dem einen Eingang der Komparatoren 15 bis 17 wird das Strommeßsignal I der Strommeßeinrichtung 5 zugeführt. Am anderen Eingang des Komparators 15 liegt eine einen ersten Grenzwert A darstellende Spannung, die etwa gleich Null, d.h. gleich dem Bezugspotential ist. Am anderen Eingang des Komparators 16 liegt eine einen zweiten Grenzwert B darstellende Spannung, die am Spannungsteiler 14 abgegriffen wird. Auch am anderen Eingang des Komparators 17 liegt eine am Vergleicher 14 abgegriffene Spannung, die einen dritten Grenzwert C darstellt, wobei der zweite Grenzwert B zwischen dem ersten Grenzwert A und dem dritten Grenzwert C liegt.

Die Grenzwerte A, B, C sind dem Ausgangssignal X_{W} des Summiergliedes 12 und auch dem Meßsignal X proportional. Die Komparatoren 15 bis 17 erzeugen jeweils ein Ausgangssignal D, E und F, d.h. ein binäres 1-Signal, wenn das ihrem einen Eingang zugeführte Strommeßsignal I den ihrem anderen Eingang zugeführten Grenzwert A, B bzw. C überschreitet, und ein inverses Signal, wenn das Strommeßsignal I den jeweiligen Grenzwert unterschreitet. Die Ausgangssignale D, E und F der Komparatoren 15 bis 17 werden der Logikschaltung 18 zugeführt, die diese Signale in vorbestimmter Weise verknüpft und in Abhängigkeit von dem Verknüpfungsergebnis an ihren beiden Ausgängen Einschaltsignale G und H erzeugt, die jeweils über die Treiberstufen 20, 21 die Schaltelemente S₁ und S₂ steuern.

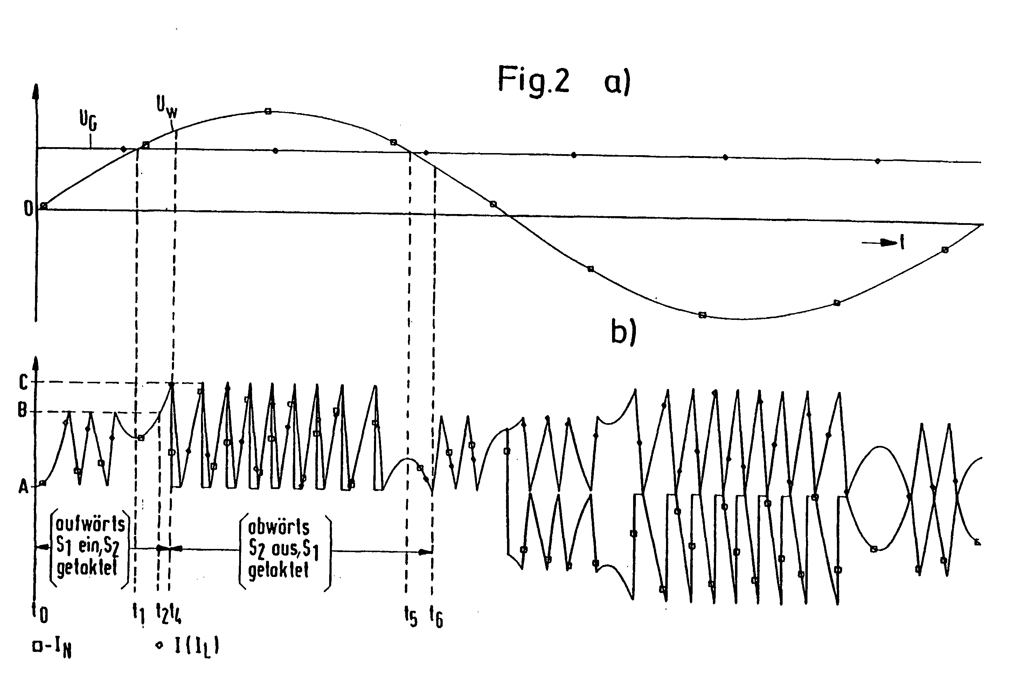

Nachstehend sei die Wirkungsweise der Stromversorgungseinrichtung nach Fig. 1 anhand der in Fig. 2 dargestellten Diagramme näher erläutert.

Nach Fig. 2(a) liegt die Wechselspannung U_{W} im Zeitraum von tₒ bis t₁ während eines Aufwärtswandlungsmodus unterhalb des Betrags der Gleichspannung U_{G}. Während dieses Zeitraums ist der erste Schalter S₁ eingeschaltet (geschlossen bzw. in den leitenden Zustand durchgesteuert). Da die Gleichspannung U_{G} währenddessen größer als der Betrag der Wechselspannung U_{w} ist, fließt über das Schaltelement S₁ kein Strom durch die Diode D₂ in den Glättungskondensator Cₒ bzw. zum Verbraucher 2. Dagegen wird der Schalter S₂ gemäß Fig. 2(b) abwechselnd, in verhältnismäßig großen Zeitabständen, d.h. mit relativ kleiner Frequenz, ein- und ausgeschaltet, d.h. getaktet, solange der Strom I_{L} bzw. das Strommeßsignal I kleiner als der Grenzwert B ist. Das heißt, wenn das abfallende Strommeßsignal I den unteren Grenzwert A erreicht, wird der Schalter S₂ eingeschaltet. Dagegen wird der Schalter S₂ wieder ausgeschaltet, wenn das ansteigende Strommeßsignal I den mittleren Grenzwert B erreicht, so daß der Strom I_{L} und mithin das Strommeßsignal I wieder abfällt. Wenn der Betrag der Wechselspannung U_{w} nach dem letztmaligen Ausschalten des Schalters S₂ die Gleichspannung U_{G} überschreitet (im Zeitpunkt t₁), steigt das Strommeßsignal I noch vor dem Erreichen des unteren Grenzwertes A wieder an, da der Schalter S₁ im Zeitpunkt t₁ weiterhin eingeschaltet ist. Im Zeitpunkt t₂ überschreitet das Strommeßsignal I den mittleren Grenzwert B. Das daraufhin aufgrund des Stromflusses durch den eingeschalteten Schalter S₁ weiter ansteigende Strommeßsignal I erreicht danach im Zeitpunkt t₄ den oberen Grenzwert C. In diesem Zeitpunkt wird der Schalter S₁ ausgeschaltet und damit der Aufwärtswandlungsmodus beendet, während der Schalter S₂ in dem sich anschließenden Abwärtswandlungsmodus weiterhin ausgeschaltet bleibt. Das Strommeßsignal I nimmt jetzt vom Zeitpunkt t₄ an wieder ab, bis es den unteren Grenzwert A erreicht, um danach periodisch bzw. abwechselnd bis zum Zeitpunkt t₆ durch den Schalter S₁ ein- und ausgeschaltet zu werden. Danach wiederholen sich die Schaltvorgänge entsprechend dem Zeitraum von tₒ bis t₁, bis der Betrag der Wechselspannung U_{w} wieder die Gleichspannung U_{G} überschreitet. Danach wiederholen sich dann die Schaltvorgänge entsprechend dem Zeitraum von t₁ bis t₆, wobei im Zeitpunkt t₆ wieder auf Aufwärtswandlungsmodus umgeschaltet wird. Die Umschaltung von Aufwärts- auf Abwärtswandlungsmodus, und umgekehrt, erfolgt mithin als Funktion des Stroms I_{L} etwas verzögert gegenüber den Zeitpunkten, in denen die Wechselspannung U_{W} die Gleichspannung U_{G} über- bzw. unterschreitet.

Im Nulldurchgang der Wechselspannung U_{w} kehrt sich die Richtung des in Fig. 2(b) ebenfalls dargestellten Verlaufs des Eingangsstroms I_{N} (des Netzstroms) um, während das Strommeßsignal I weiterhin positiv bleibt.

Die Zeitpunkte, wie t₄ und t₆, in denen von Aufwärtsauf Abwärtswandlungsmodus, und umgekehrt, umgeschaltet wird, werden nur durch Überwachung des Strom I_{L} bestimmt. Mithin braucht die Wechselspannung U_{w} nicht gemessen zu werden oder bekannt zu sein; wie erwähnt, wird von Aufwärtswandlungsmodus auf Abwärtswandlungsmodus umgeschaltet, wenn der Strom I_{L} den ersten Grenzwert A nicht erreicht und danach den zweiten Grenzwert B überschreitet, und von Abwärtswandlungs- auf Aufwärtswandlungsmodus umgeschaltet, wenn der Strom, ausgehend vom unteren Grenzwert A den mittleren Grenzwert B nicht erreicht, sondern wieder auf den unteren Grenzwert A abfällt. In der Praxis wird diese Umschaltung dann durchgeführt, wenn dem Schalter S₁ des Abwärtswandlers ein Einschaltsignal zugeführt wird und der Strom I_{L} nicht ansteigt. Das kann anhand des Ausgangssignals D des Komparators 15 festgestellt werden. Die Grenzwerte A, B und C stehen in einem festen Verhältnis zueinander, das durch die Widerstände R₁, R₂ und R₃ bestimmt wird. Der Grenzwert C ist immer größer als der Grenzwert B. Vorzugsweise sind die Grenzwerte über eine Periode der Wechselspannung U_{w} konstant. Würden sie dagegen dem sinusförmigen Verlauf der Wechselspannung folgen, wäre es zwar möglich, den Leistungsfaktor noch weiter zu steigern, doch würde sich der Schaltungsaufwand gleichzeitig erhöhen.

Mit zunehmender Belastung der Stromversorgungseinrichtung durch den Verbraucher 2, d.h. zunehmendem Verbraucherstrom, steigt der Maximalwert des durch die Drosselspule L bzw. die Strommeßeinrichtung 5 fließenden Stroms I_{L}, während die Gleichspannung U_{G} abfällt und dadurch das Ausgangssignal X_{W} des Summiergliedes 12 und mithin die Spannung am Spannungsteiler 14 ansteigt. Demzufolge nehmen auch die Grenzwerte B und C zu, und die Schaltfrequenz der Schalter S₁, S₂, mit der sie abwechselnd ein- und ausgeschaltet werden, nimmt ab. Eine Abnahme dieser Schaltfrequenz bedeutet wiederum einen Anstieg der Gleichspannung U_{G}, wodurch die Abnahme der Gleichspannung U_{G} wieder ausgeregelt wird.

Der untere Grenzwert A wird immer dann erreicht, wenn sich die Drosselspule L über die Dioden D₁, D₂ und der Glättungskondensator Cₒ nach dem Ausschalten des Schalters S₂ entladen hat. Der Mittelwert des Stroms I_{L} ist daher im Vergleich zu dem Fall, daß der Strom I_{L} nicht bis auf den unteren Grenzwert A bzw. den Wert Null abnimmt, klein, so daß die Diode D₂ beim Einschalten des Schalters S₂ durch einen geringeren Sperrstrom während der Sperrerholungszeit belastet wird. Beides trägt dazu bei, daß die Verlustleistung der Drosselspule L abnimmt und mithin ihre Abmessungen entsprechend geringer gewählt werden können.

Wenn ein starker Strom erforderlich ist, z.B. um einen Kompressor anlaufen zu lassen, kann der untere Grenzwert A kurzzeitig erhöht werden, so daß der Mittelwert des Strom I_{L} ansteigt.

Wegen der Abhängigkeit der Schaltfrequenz der Schalter S₁, S₂ von der Belastung enthält die Steuereinrichtung 11 in der Logikschaltung 18 einen nicht dargestellten Schaltfrequenzbegrenzer. Dieser verhindert durch Verzögerung des Einschaltzeitpunkts der Schalter S₁, S₂, wenn seit dem letzten Einschaltzeitpunkt eine Mindestzeit nicht abgelaufen ist, ein Unterschreiten einer Minimal-Schaltperiodendauer der Schalter S₁, S₂. Ferner verhindert er durch Vorverlegung des Einschaltzeitpunkts der Schaltelemente S₁, S₂, wenn seit dem letzten Einschaltzeitpunkt eine Maximalzeit abgelaufen ist, ein Überschreiten einer Maximal-Schaltperiodendauer. Dies hat den Vorteil, daß eine zu große Verringerung des Wirkungsgrads der Stromversorgungseinrichtung bei Teilbelastung vermieden wird.

## Patentansprüche

1. Verfahren zur Erzeugung einer geregelten Gleichspannung (U_{G}) aus einer Wechselspannung (U_{w}) mittels einer Stromversorgungseinrichtung, die einen Abwärtswandler (S₁, D₁, D₂, C₀, L) mit einem ersten Schalter (S₁), einen Aufwärtswandler (S₂, D₂, C₀, L) mit einem zweiten Schalter (S₂), eine den Wandlern gemeinsame Drosselspule (L) und eine Steuereinrichtung (11) aufweist, die sequentiell den Abwärtswandler und den Aufwärtswandler so steuert, daß die Stromversorgungseinrichtung jeweils in einem Abwärtswandlungsmodus und in einem Aufwärtswandlungsmodus betrieben wird, **dadurch gekennzeichnet,**
- **daß** ein Strommeßsignal (I) des durch die Drosselspule (L) fließenden Stroms (I_{L}) mit einem ersten Grenzwert (A), einem zweiten Grenzwert (B) und einem dritten Grenzwert (C) verglichen wird, wobei der erste Grenzwert (A) nahe bei Null und der zweite Grenzwert (B) zwischen dem ersten Grenzwert (A) und dem dritten Grenzwert (C) liegt und wenigstens der zweite und der dritte Grenzwert (B, C) einer dem Istwert (X) der Gleichspannung (U_{G}) entsprechenden physikalischen Größe umgekehrt proportional sind,
- **daß** die Steuereinrichtung (11) die Stromversorgungseinrichtung vom Aufwärtswandlungsmodus in den Abwärtswandlungsmodus umschaltet, wenn das ansteigende Strommeßsignal (I) nach dem Erreichen des zweiten Grenzwertes (B) abfällt und den ersten Grenzwert (A) nicht wieder erreicht, sondern bis zum dritten Grenzwert (C) ansteigt (t₄),
- **daß** die Steuereinrichtung (11) die Stromversorgungseinrichtung vom Abwärtswandlungsmodus in den Aufwärtswandlungsmodus umschaltet, wenn das abfallende Strommeßsignal nach Erreichen des ersten Grenzwertes (A) ansteigt und den zweiten Grenzwert (B) nicht erreicht, sondern wieder auf den ersten Grenzwert (A) abfällt (t₆) und
- **daß** der erste Schalter (S₁) im Aufwärtswandlungsmodus (t₀-t₁) eingeschaltet ist und währenddessen der zweite Schalter (S₂) ausgeschaltet wird, wenn das ansteigende Strommeßsignal (I) den zweiten Grenzwert (B) erreicht, und eingeschaltet wird, wenn das abfallende Strommeßsignal (I) den ersten Grenzwert (A) erreicht, und daß im Abwärtswandlungsmodus (t₁-t₅) der zweite Schalter (S₂) ausgeschaltet ist und währenddessen der erste Schalter (S₁) eingeschaltet wird, wenn das abfallende Strommeßsignal (I) den ersten Grenzwert (A) erreicht, und ausgeschaltet wird, wenn das ansteigende Strommeßsignal (I) den dritten Grenzwert (C) erreicht.

2. Stromversorgungseinrichtung für einen Verbraucher (2), wo die Stromversorgungseinrichtung einen Aufwärtswandler (S₂, D₂, C₀, L) und einen Abwärtswandler (S₁, D₁, D₂, C₀, L) beinhaltet die gemeinsam eine Drosselspule (L) teilen und wo die Stromversorgungseinrichtung von einer Steuereinrichtung (11) abwechselnd in Abwertswandlungsmodus und Aufwertswandlungsmodus betrieben wird
**dadurch gekennzeichnet, daß** in der Steuereinrichtung (11) mindestens zwei Grenzwerte (B,C) gebildet werden, die sich ändern wenn eine Ausgangsspannung (U_{G}) der Stromversorgungseinrichtung sich ändert,
- daß diese Grenzwerte mittels Komparatoren (15,16,17) mit einem Strommeßsignal (I), das dem Spulenstrom (I_{L}) entspricht, verglichen wird und hieraus ein Komparatorausgangssignal (D,E,F) gebildet wird,
- daß dieses Ausgangssignal einer Logikschaltung (18) zugeführt wird und hieraus bestimmt wird wann von Aufwärtswandlungsmodus auf Abwärtswandlungsmodus oder umgekehrt umgeschaltet werden soll und
- daß das Ausgangssignal mit Hilfe der Logikschaltung benutzt wird um Schalter (S1,S2) während des Abwertswandlungsmodus bzw. des Aufwertswandlungsmodus zu takten.

3. Stromversorgungseinrichtung nach Anspruch 2 **dadurch gekennzeichnet, daß** die Steuereinrichtung (11) drei Komparatoren (15, 16, 17) für den Vergleich jeweils eines der Grenzwerte (A, B, C) mit dem Strommeßsignal (I) einer mit der Drosselspule (L) in Reihe liegenden Strommeßeinrichtung (5) aufweist und daß wenigstens der zweite und dritte Grenzwert (B, C) vom Ausgangssignal (X_{W}) des Summiergliedes (12) abhängig sind.

4. Stromversorgungseinrichtung nach Anspruch 3, **dadurch gekennzeichnet, daß** der zweite und der dritte Grenzwert (B, C) dem Ausgangssignal (X_{W}) des Summiergliedes (12) direkt proportional sind.

5. Stromversorgungseinrichtung nach Anspruch 4, **dadurch gekennzeichnet, daß** die Grenzwerte (A, B, C) an einem Spannungsteiler (14) abgegriffen werden, der mit dem Ausgang des Summiergliedes (12) über einen Verstärker (13) verbunden ist.

6. Stromversorgungseinrichtung nach einem der Ansprüche 3 bis 5, **dadurch gekennzeichnet, daß** die Schalter (S₁, S₂) unmittelbar in Reihe geschaltet sind.

7. Stromversorgungseinrichtung nach einem der Ansprüche 3 bis 6, **dadurch gekennzeichnet, daß** die Steuereinrichtung (11) einen Schaltfrequenzbegrenzer aufweist, der durch Verzögerung des Einschaltzeitpunkts der Schalter (S₁, S₂), wenn seit dem letzten Einschaltzeitpunkt eine Mindestzeit nicht abgelaufen ist, ein Unterschreiten einer Minimal-Schaltperiodendauer der Schalter (S₁, S₂) und durch Vorverlegung des Einschaltzeitpunkts der Schalter (S₁, S₂), wenn seit dem letzten Einschaltzeitpunkt eine Maximalzeit abgelaufen ist, ein Überschreiten einer Maximal-Schaltperiodendauer verhindert.

## Claims

1. Method for generating a regulated D.C. voltage (U_{G}) from an A.C. voltage (U_{W}) by means of a power supply device, comprising a step-down converter (S₁, D₁, D₂, C₀, L) with a first switch (S₁), a step-up converter (S₂, D₂, C₀, L) with a second switch (S₂), an inductor (L) which is common for both converters, and a control device (11), which sequentially controls the step-down converter and the step-up converter in such a way, that the power supply device is operated in either a step-down conversion mode or a step-up conversion mode, **characterised in that**
- a current measuring signal (I) of the current (I_{L}) flowing through the inductor (L) is compared with a first limit value (A), a second limit value (B) and a third limit value (C), the first limit value (A) being close to zero and the second limit value (B) ranging between the first limit value (A) and the third limit value (C), and at least the second and the third limit values (B, C) being inversely proportional to the actual value (X) of a physical magnitude corresponding to the D.C. voltage (U_{G}),
- the control device (11) switches the power supply device from the step-up conversion mode to the step-down conversion mode, when, after reaching the second limit value (B), the rising current measuring signal (I) starts decreasing, though not reaching the first limit value (A), but rises (t₄) to the third limit value (C), and
- the control device (11) of the power supply device switches from the step-down conversion mode to the step-up conversion mode, when the decreasing current measuring signal, after reaching the first limit value (A), starts rising and does not reach the second limit value (B), but decreases back (t₆) to the first limit value (A)
- that in the step-up conversion mode (t₀ to t₁) the first switch (S₁) is on and during this mode the second switch (S₂) is turned off, when the rising current measuring signal (I) reaches the second limit value (B), and is turned on when the decreasing current measuring signal (I) reaches the first limit value (A), and that in the step-down conversion mode (t₁ to t₅) the second switch (S₂) is off and during this mode the first switch (S₁) is turned on, when the decreasing current measuring signal (I) reaches the first limit value (A), and is turned off, when the rising current measuring signal (I) reaches the third limit value (C).

2. Power supply device for a load (2), where the power supply device comprises a step-up converter (S₂, D₂, C₀, L) and a step-down converter (S₁, D₁, D₂, C₀, L) which share a common inductor (L), and where a control device (11) alternatingly operates the power supply device in a step-down conversion mode or a step-up conversion mode **characterized in**
- **that** at least two limit values (B,C) are generated in the control device (11), which limit values change if an output voltage (U_{G}) of the power supply device changes
- **that** these limit values by way of comparators (15,16,17) are compared to a current measuring signal (I) which corresponds to the inductor current (I_{L}) and that a comparator output signal (D,E,F) is generated from this
- **that** this output signal is fed to a logic circuit (18) and that decision is taken here when switching from step-up conversion mode to step-down conversion mode or vice versa has to made, and
- **that** the output signal by way of the logic circuit is used for switching the switches (S1,S2) during the step-up conversion mode and the step-down conversion mode respectively.

3. Power supply device according to claim 2 **characterised in that** the control device (11) has three comparators (15, 16, 17), each comparing one of the limit values (A, B, C) with the current measuring signal (I) of a current measuring device (5) arranged in series with the inductor (L) and that at least the second and the third limit values (B, C) are dependent upon the output signal (X_{W}) of the adder (12).

4. Power supply device according to claim 3, **characterised in that** the second and the third limit values (B, C) are directly proportional with the output signal (X_{W}) of the adder (12).

5. Power supply device according to claim 4, **characterised in that** the limit values (A, B, C) are supplied from a voltage divider (14), which is connected with the output of the adder (12) via an amplifier (13).

6. Power supply device according to one of the claims 3 to 5, **characterised in that** the switches (S₁, S₂) are connected directly in series.

7. Power supply device according to one of the claims 3 to 6, **characterised in that** the control device (11) comprises a switching frequency limiter, which prevents that the switching period duration of the switches (S₁, S₂) drops below a certain minimum by delaying the switching-on time of the switches S₁, S₂, when a minimum time has not lapsed since the latest switching-on time, and prevents an exceeding of a maximum switching period duration by advancing the switching-on time of the switching elements (S₁, S₂), when a maximum time has lapsed since the latest switching-on time.

## Revendications

1. Procédé pour générer une tension continue réglée (U_{G}) à partir d'une tension alternative (U_{W}) au moyen d'un dispositif d'alimentation en courant, qui comporte un convertisseur abaisseur (S₁, D₁, D₂, C₀, L) comportant un premier interrupteur (S₁), un convertisseur élévateur (S₂, D₂, C₀, L) comportant un second interrupteur (S₂), une bobine d'arrêt (L) commune aux convertisseurs et un dispositif de commande (11), qui commande séquentiellement le convertisseur abaisseur et le convertisseur élévateur de telle sorte que le dispositif d'alimentation en courant fonctionne respectivement dans un mode de conversion avec abaissement et dans un mode de conversion avec élévation, **caractérisé** en ce
- en ce qu'un signal (I) de mesure du courant (I_{L}), qui circule dans la bobine d'arrêt (L), est comparé à une première valeur limite (A), à une seconde valeur limite (R), à une troisième valeur limite (C), la première valeur limite (A) étant presque nulle et la seconde valeur limite (B) étant située entre la première valeur limite (A) et la troisième valeur limite (C), et au moins les seconde et troisième valeurs (B, C) étant inversement proportionnelles aux grandeurs physiques qui correspondent à la valeur réelle (X) de la tension continue (U_{G}),
- en ce que le dispositif de commande (11) commute le dispositif d'alimentation en courant du mode de conversion avec élévation au mode de conversion avec abaissement,. lorsque le signal (I) de mesure du courant, qui augmente, diminue une fois qu'est atteinte la seconde valeur limite (B), et n'atteint pas à nouveau la première valeur limite (A), mais augmente (t₄) jusqu'à la troisième valeur limite (C),
- en ce que le dispositif de commande (11) commute le dispositif d'alimentation en courant du mode de conversion avec abaissement au mode de conversion avec élévation, lorsque le signal de mesure de courant, qui diminue, augmente après avoir atteint la première valeur limite (A) et n'atteint pas la seconde valeur limite (B), mais retombe à nouveau (t₆) à la première valeur limite (A), et
- en ce que le premier interrupteur (S₁) est fermé dans le mode de conversion avec élévation (t₀-t₁) et pendant ce temps le second interrupteur (S₂) est ouvert lorsque le signal de mesure de courant (I), qui augmente, atteint la valeur limite (B), et est fermé lorsque le signal de mesure de courant (I), qui diminue, atteint la première valeur limite (A) , et que dans le mode de conversion avec abaissement (t₁-t₅), le second interrupteur (S₂) est ouvert et, pendant ce temps, le premier interrupteur (S₁) est fermé, lorsque le signal de mesure de courant (I), qui diminue, atteint la première valeur limite (A), et est ouvert, lorsque le signal de mesure de courant (I), qui augmente, atteint la troisième valeur limite (C).

2. Dispositif d'alimentation en courant pour un appareil d'utilisation (2), dans lequel le dispositif d'alimentation en courant contient un convertisseur élévateur (S₂, D₂, C₀, L) et un convertisseur abaisseur (S₁, D₁, D₂, C₀, L), qui partagent la bobine d'arrêt commune (T), et dans lequel un dispositif de commande (11) fait fonctionner le dispositif d'alimentation en courant alternativement dans un mode de conversion avec abaissement et dans un mode de conversion avec élévation,
**caractérisé en ce que** dans le dispositif de commande (11) sont produites au moins deux valeurs limites (B, C), qui varient lorsqu'une tension de sortie (U_{G}) du dispositif d'alimentation en courant varie,
- **en ce que** ces valeurs limites sont comparées au moyen de comparateurs (15, 16, 17) à un signal de mesure de courant (I), qui correspond au courant de bobine (I_{L}), et qu'un signal de sortie (D, E, F) du comparateur est formé en conséquence,
- **en ce que** ce signal de sortie est envoyé à un circuit logique (18) et en conséquence une détermination est faite pour savoir quand la commutation doit être exécutée du mode de conversion avec élévation au mode de conversion avec abaissement où inversement, et
- **en ce que** le signal de sortie est utilisé à l'aide du circuit logique pour commander de façon cadencée des interrupteurs (S1, S2), pendant le mode de conversion avec abaissement ou pendant le mode de conversion avec élévation.

3. Dispositif d'alimentation en courant selon la revendication 2, **caractérisé en ce que** le dispositif de commande (11) comporte un comparateur (15, 16, 17) pour la comparaison respectivement de l'une des valeurs limites (A, B, C) au signal de mesure de courant (I) d'un dispositif de mesure de courant (5) disposé en série avec la bobine d'arrêt (T), et **en ce qu'**au moins les seconde et troisième valeurs limites (B, C) dépendent du signal de sortie (X_{W}) du circuit de sommation (12).

4. Dispositif d'alimentation en courant selon la revendication 3, **caractérisé en ce que** les seconde et troisième valeurs limites (B, C) sont directement proportionnelles au signal de sortie (X_{W}) du circuit de sommation (12).

5. Dispositif d'alimentation en courant selon la revendication 4, **caractérisé en ce que** les valeurs limites (A, B, C) sont prélevées au niveau d'un diviseur de tension (14), qui est relié à la sortie du circuit de sommation (12) par l'intermédiaire d'un amplificateur (13).

6. Dispositif d'alimentation en courant selon l'une des revendications 3 à 5, **caractérisé en ce que** les interrupteurs (S₁, S₂) sont branchés directement en série.

7. Dispositif d'alimentation en courant selon l'une des revendications 3 à 6, **caractérisé en ce que** le dispositif de commande (11) comporte un limiteur de la fréquence de commutation, qui empêche un dépassement par valeurs inférieures d'une durée de période de commutation minimale des interrupteurs (S₁, S₂) par retardement de l'instant de fermeture des interrupteurs (S₁, S₂) lorsqu'à partir du dernier instant de fermeture, une durée minimale ne s'est pas écoulée, et empêche un dépassement par valeur supérieures d'une durée de période de commutation maximale par avance de l'instant de fermeture des interrupteurs (S₁, S₂), lorsqu'une durée maximale s'est écoulée depuis le dernier instant de fermeture.
